# EUROPEAN PATENT APPLICATION

(11) **EP 4 169 390 A1**
(43) Date of publication of application: **26.04.2023**
(21) Application number: 21203714.7
(22) Date of filing: 20.10.2021
(51) Int. Cl.: A23L 7/126, A23L 7/17, A23L 19/00, A23P 20/10, A23P 30/20

(54) **EDIBLE SNACK FOOD PRODUCT**

(71) Applicant: perora GmbH, 69120 Heidelberg (DE)
(72) Inventor: VETTER, Dirk, 69121 Heidelberg (DE); Wagenblaß, Katja, 74927 Eschelbronn (DE); Gartzke, Dominik, 74927 Eschelbronn (DE)
(74) Representative: Pharma Patents International AG

(57) **Abstract**

The invention provides an edible snack food product comprising:
a) dried fruit;
b) cereals;
c) fruit pulp;
wherein the snack food product has a total sugar content of 40 % w/w or less.

## Description

### BACKGROUND OF THE INVENTION

There exists a multitude of processed snack products which are portable, conveniently packaged and immediately available to the customer like chocolate or cereal bars, cookies, fruit gums and so forth. However, all these snacks have in common a very high sugar content and are considered unhealthy due to their nutritional profile.

A recent emerging category of ready-to-eat snacks is fruit confectionary, in particular date balls. This spherically shaped confectionary is also known as bliss balls or energy balls. Date balls consist of shredded dates and may be refined with a certain amount of nuts, cereal products, chocolate, sugar syrups and other dried fruits. Typically, a date ball is rolled in a flavour powder or in chopped nuts or almonds.

There are several marketed commercial date ball products and also plenty of recipes freely available on social media channels. Almost all commercial products as well as the overwhelming majority of recipes are using dates as a source of binding sugar. The natural high sugar content of dates performs as a binder and allows the formation of stable round balls by mechanical pressing of finely chopped dates.

With common date-based compositions, marketed commercial products can be promoted as "unsweetened" fruit snack suggesting a good nutritional profile, even though they comprise mainly sugar. For instance, the high content of fruit sugar of such date balls gives rise to a nutritional profile of "B" or "C" according to the NutriScore. Conventional fruit snacks have got typically a sugar content of more than 40%, usually around 50%, and present different consistencies depending on the respective ingredients and recipe. Examples of different marketed fruit snacks show a product firmness between 5N and 15N (Newton), but strengths above 10 N are not desirable for sensory reasons.

### SUMMARY OF THE INVENTION

The invention relates to an edible snack food product comprising:
a) dried fruit;
b) cereals and optionally nuts and/or seeds;
c) fruit pulp;
wherein the snack food product has a total sugar content of 40 % w/w or less.

In a further aspect, the invention relates to a method for producing an edible snack food product according to any one of claims 1 to 15, comprising the steps of:
a) mixing the dried fruit, fruit pulp and nuts, seeds and or cereals;
b) extruding the mixture obtained in step a);
c) cutting and shaping the extruded mixture into desired form;
d) optionally coating the shaped mixture;
e) backing the edible snack food product.

### DESCRIPTION OF THE DRAWINGS

Figure 1 shows firmness measurements of edible snack food products without fruit pulp and rolled grains corresponding to modified examples of the invention: 1 - Pineapple-Coconut; 2 - Cherry-Raspberry; 3 - Apricot-Amaranth; 4 - Mango-Almond; not producible, no data available (ND) 5 - Dates-Cocoa; not producible, no data available (ND).
Figure 2 shows continuous force measurement of snack balls to compare the consistency of recipes with fruit pulp or the corresponding amount of water.
Figure 3 shows firmness measurements of edible snack food products according to the present invention. 1 - Mango-Almond; 2 - Cherry-Raspberry; 3 - Dates-Cocoa; 4 - Apricot-Amaranth; 5 - Pineapple-Coconut; 6 - Apple-Cape Gooseberry

### DETAILED DESCRIPTION OF THE INVENTION

The present invention relates to an edible snack food product. The snack food product according to the invention is suitable for mass production and shows a healthy and balanced nutritional profile, that corresponds to a "NutriScore" A label. A major advantage of the edible snack product according to the present invention is a lack of added free sugars, which results in a total sugar content of less than 40% and water activity of maximum between aW = 0,6 and 0,9 and, thus, has a low glycemic index. Preferably the water activity aW is between 0,7 and 0,8.

The inventors found that snack products that are based on fruit pulp allow for a reduced sugar content, while having a softer texture compared to fruit snacks based on artificial binder or added thickening agents.

As such, in a first aspect the invention relates to an edible snack food product comprising:
a) dried fruit;
b) cereal grains and optionally nuts and/or seeds;
c) fruit pulp;
wherein the snack food product has a total sugar content of 40 % w/w or less.

In the context of the present invention, the term nuts refers to all kinds of nuts, both in a botanical and culinary sense. Examples are almonds (Prunus dulcis), brazil nuts (Bertholletia excelsa), cashew (Anacardium occidentale), chestnut (Castanea dentata), coconut (Cocos nucifera), hazelnut (Corylus spp.), macadamia (Macadamia spp.) peanut (Arachis hypogaea), pecan (Carya illinoinensis), pine nuts (Pinus spp.), pistachio (Pistacia vera), tiger nut/chufa (Cyperus esculentus), walnut Juglans regia, Juglans nigra), Acorn (Quercus, Lithocarpus and Cyclobalanopsis spp.), beech nut (Fagus grandifolia, Fagus sylvatica), candlenut (Aleurites moluccana), guinea peanut (Pachira glabra), Malabar chestnut (Pachira aquatica), Johnstone River almond (Elaeocarpus bancroftii), Karuka (Pandanus julianettii), Kurrajong (Brachychiton spp.), Mongongo (Ricinodendron rautanenii), palm nuts (Elaeis guineensis), Red Bopple nut (Hicksbeachia pinnatifolia), Yellow walnut (Beilschmiedia bancroftii), Australian Cashew nut (Semecarpus australiensis), Baru nut (Dipteryx alata), Canarium nuts (Canarium spp.), Chilean hazel (Gevuina avellana), Gabon nut (Coula edulis), Hickory nuts (Carya spp.), Jack nuts (Artocarpus heterophyllus), Jelly Palm nut (Butia capitata), Bread nuts (Artocarpus camansi), Burrawang nut (Macrozamia communis), Ginkgo nuts (Ginkgo biloba), Bunya nut (Araucaria bidwillii), Monkey-puzzle nut (Araucaria araucana), Paraná /Brazil pine nut (Araucaria angustifolia), Paradise nut (Lecythis usitata).

The term nut puree refers to finely grounded and mixed nuts, as well as nut-like seeds and kernels, which then show a creamy, viscous consistency, often called nut butter. Apart from water, if necessary, no other ingredients are added. The used nuts can be roasted before grounding and are used with skin or blanched. Examples are almonds, peanuts, hazelnuts, cashew nuts, pistachios, macadamia nuts, pecan nuts, walnuts, brazil nuts, coconut, chestnut, tigernuts, pine nuts, sesame seeds, hemp seeds, pumpkin seeds, sunflower seeds and apricot kernels and others.

The term cereal grains refer to any kind of grass cultivated for the edible component of its grain, which is composed of the endosperm, germ and bran. Examples are wheat (Triticum spp.) including Einkorn (T. monococcum), Emmer (T. dicoccum), Durum (T. durum) and Kamut (T. durum x xpolonicum), spelt (T. spelta), barley (Hordeum), oats (Avena sativa), Triticale (T. aestivum L. x Secale cereale L.), rye (Secale spp.), millet (Panicum, Setaria, Pennisetum, Eleusine and Eragrostis), Sorghum (Sorghum bicolor), rice (Oryza) and maize (Zea mays).

The term pseudocereals refers to edible grains from other plant families. Examples are buckwheat (Fagopyrum esculentum), quinoa (Chenopodium quinoa), chia (Salvia hispanica), amaranth (Amaranthus spp.), Cockscomb (Celosia spp.), Pitseed Goosefoot (Chenopodium berlandieri), Cañahua (Cheopodium pallidicaule), Wattleseed (Acacia spp.) and Breadnut (Brosimum alicastrum).

The term rolled grains refers to a type of lightly processed whole-grain food. Traditionally, they are made from oat groats that have been dehusked and steamed, before being rolled into flat flakes under heavy rollers and then stabilized by being lightly toasted. Rolled grains can be processed from grains and pseudocereals like oats, wheat, rye, spelt, barley, millet and others.

The edible snack food product according to the invention comprises in some embodiments 15 % to 35 % of nuts, seeds and/or cereals.

In some embodiments of the invention, the nuts, seed and/or cereals are selected from almonds, cocoa, oats, walnuts, and combinations thereof.

The term fruit refers to any kind of edible seed-bearing structure in flowering plants that is formed from the ovary after flowering and includes also culinary fruits that resemble any sweet, edible part of a plant even if it does not develop from a floral ovary and/or is used in cookery as if they were a fruit. Examples are all family members of pomes, drupes, botanical berries, pepos, hesperidiums - also known as citruses, aggregate fruits, multiple fruits, capsules and plants with edible fruit-like structures, for example rhubarb (Rheum x hybridum), plum pine fruit (Podocarpus elatus), juniper berry (Juniperus communis) and cashew apple (Anacardium occidentale).

Dried fruits were processed to reduce the fruit's own water content and thus make the fruit more durable. Processes for drying are sun drying, tray air drying, freeze drying and vacuum microwave drying.

The edible snack food product comprises a high amount of fruit. As such, in some embodiments of the invention, the edible snack food product comprises at least 30%, preferably at least 40% and even more preferably 50% w/w of dried fruit.

Suitable dried fruit are readily apparent to the skilled person. In some embodiments, the invention relates to an edible snack food product as defined above, wherein the dried fruit is selected from dried apples, dried apricots, dried cherries, dried dates, dried mango, dried pineapple and combinations thereof.

The term fruit pulp refers to lightly processed fruit puree that is 100% pure fruit optionally with added water to improve the consistency. Fruit pulp is made by briefly cooking the corresponding fruit, whole or chopped, with the addition of a small amount of water if needed. The fruit pulp is then finely crushed or pureed and sterilely filled into jars and/or preserves.

It was found that, by using a baking binder composed of fruit pulp and rolled grains, a homogeneous mixture and industrial shaping of the mass can be achieved, which also allows for mass production of the products. The fruit pulp prevents the necessity of sugar syrups, and the final product has a lower sugar content than many commercially available products. The combination of fruit pulp with rolled grains compensates additional moisture in the product and the flakes swell. The water content from the fruit pulp together with the carbohydrate structures, for example fibers, from the rolled grains facilitates binding properties of the mixture. Nevertheless, the water content, especially the water activity (aw-value), stays below the critical border of 0,9 and therefore growing of microorganisms is prevented. The combination of dried fruits and fruit pulp with rolled grains leads to a markedly reduced sugar content in comparison with similar, commercially available products, on average 15% less intrinsic sugar in absence of any added free sugar.

As such, in some embodiments the edible snack food product comprises 10 % to 15 % w/w of fruit pulp.

Any fruit pulp may be used in the present invention. In some embodiments of the invention, the fruit pulp is selected from apple pulp, mango pulp, and mixtures thereof.

Ingredients can be, for example, whole in one piece, peeled, blanched, roasted, dried, cut, chopped, divided, grated, shaved, shredded, rolled, ground or popped.

An advantage of the edible snack food product is that the composition does not require an added thickening agent. In preferred embodiments the snack food product is free of an added thickening agent such as locust bean gum, starch, gelatin, and/or xanthan. In general, it is preferred that the edible snack food product is free of artificial components.

Preferably, the ingredients of the edible snack product according to the invention comprises whole fruits and nuts and other ingredients. In particular, it is preferred if the edible snack product is free of extracts of ingredients. As such, in one embodiment of the invention the snack food product is free of fruit, seed, nut or cereal extracts, such as protein extracts.

Fruit, seed, nut or cereal extracts in the context of the present invention refer to any type of extract of the ingredients. This includes aqueous or alcoholic extracts. In the context of the present invention, juice is not an extract.

In contrast to extracts, the dried fruit, nuts, seeds and/or cereals grains may be further processed. In some embodiments the dried fruit, nuts, seeds and/or cereals grains are shredded, cut, sliced and/or pulverized.

In some embodiments, the edible snack food product comprises a coating. The coating is preferably a thin coating. In some embodiments, the coating is up to 10 % (w/w) or less of the snack product. In some embodiments, the coating is 0.5 to 10 % (w/w) of the snack product. In some embodiments, the coating is up to 5% w/w of the edible snack product. In some embodiments, the edible snack product does not comprise a coating.

The coating may be based on any suitable food product, preferably the coating is based on puffed cereals, seeds, shredded or nuts or seeds, and/or dried fruit or nut flakes.

An advantage of the invention is that the edible snack product has a high nutritional value without added sugars and other compounds. As such, in some embodiments of the invention the snack food product consists of:
a) dried fruit;
b) cereals and optionally nuts and/or seeds;
c) fruit pulp;
d) optionally a coating of puffed cereals, seeds, shredded nuts or seeds, and/or dried fruit or nut flakes or any combination thereof.

In specific embodiments, the invention relates to an edible snack food product comprising or consisting of:
a) at least 40 % w/w dried fruit;
b) 10 to 15 % w/w fruit pulp;
c) 15 to 35 % w/w cereals and optionally nuts and/or seeds; and
d) optionally 1 to 10% w/w of puffed cereals, seeds, shredded nuts or seeds, and or dried fruit and/or nut flakes as a coating.

In a further aspect, the invention relates to a method for producing an edible snack food product according to any one of claims 1 to 15, comprising the steps of:
a) mixing the dried fruit, fruit pulp and nuts, seeds and or cereals;
b) extruding the mixture obtained in step a);
c) cutting and shaping the extruded mixture into desired form;
d) optionally coating the shaped mixture;
e) baking the edible snack food product.

In some embodiments of the invention, the method additionally comprises the step of coating the shaped mixture with puffed cereals, seeds, shredded nuts or seeds, and/or dried fruit or nut flakes or any combination thereof.

In some embodiments in step c) the mixture is shaped into round and/or spherical forms, e.g., into round balls.

The following examples serve to illustrate the invention, however should not be understood as restricting the scope of the invention.

### EXAMPLES

The manufacturing process for the production of the snack food product described here is carried out stepwise with the help of 2 special machines. In the first device, the ingredients are chopped, homogeneously mixed and in the second instrument, portions of this fruit mixture are used to form even, dimensionally stable balls of a defined diameter. The chopping and mixing of ingredients is performed by a cutter (Morgan Catering Equipment GmbH, Cutter 950015). All ingredients can be thoroughly chopped and homogeneously mixed at the same time or different size distributions can be achieved by staggered addition. Afterwards, the mass is formed in portions by means of a Boilie machine (Boilie-Benz, http://www.boiliemaschine.eu). This is done by 2 rotating rollers, which have hemispherical notches at the distance of the desired diameter and thus an added portion of fruit mass is divided into several parts and rounded to spherical shapes.

The produced snack food product can then, if desired, be transferred into a deep plate containing fruit and/or cocoa powder and/or pieces of nuts and/or other finely divided ingredients and are rolled in these compounds to create a coating of the bliss ball. For industrial mass production the process can be upscaled.

Afterwards, the snack food product is gently baked at 120°C until a residual moisture of max. 0,7-0,8 aw is reached. This step increases the shelf life of the snack food product as the heat kills microorganisms and the reduction of the water activity prevents their renewed growth.

The snack food product described here is packaged in airtight sealed glass containers with approximately 20 pieces in each container. With this sustainable packaging the snack food product is storable for a very long time and if empty, the glass container can be recycled and/or used for other purposes by the customer.

The following snack products are non-limiting examples according to the invention.

### Example 1: Apricot - Amaranth fruit balls

| **Ingredient** | **amount (g)** |
|---|---|
| dried apricots | 600 |
| almonds | 150 |
| rolled oats (small leaf) | 130 |
| apple pulp | 100 |
| puffed amaranth (coating) | 20 (0.2 g per piece) |

All ingredients (Horst Bode Import-Export GmbH, Germany) are weighed (KFB-TM, Kern & Sohn GmbH, Germany) and mixed thoroughly in a big blender (Hummus Cutter VHCOZ50, GGM Gastro International GmbH, Germany) on speed stage 5 or 6 for 2 minutes.

Subsequently the fruit mass is transferred into an extruder (Extruder 42-1-1, Boilie Benz, Germany) to form round strands of approx. 50cm length and 4cm diameter. Strands are then fed into a Boilie machine (Big Benz 24mm, Boilie Benz, Germany) to shape small balls of 2cm diameter and approx. 10g weight per fruit ball.

A batch of 20 fruit balls each is transferred into a flat, rectangular box with excess puffed amaranth and coated overall by slight tilting and shaking. On average, each fruit ball is covered with 0,2g puffed amaranth. Then they are transferred manually on baking sheets with a spacing of min. 2cm between each ball and heated for 15min at 120°C with air circulation in a professional oven (XB695, UNOX S.p.A. Italy) After cooling down for 24h at room temperature, fruit balls are quality checked for a_{w} < 0,7 and stability and subsequently packaged in sealed glass containers for shipping. Glasses can be stored at -20°C up to 6 weeks after packaging.

The apricot amaranth fruit balls have a total sugar content of 25.8 % (w/w).

### Example 2: Apple - Pumpkin seeds fruit balls

| **Ingredient** | **amount (g)** |
|---|---|
| dried apple cubes | 333 |
| dried apricots | 292 |
| rolled oats (small leaf) | 135 |
| apple pulp | 135 |
| walnuts | 40 |
| shredded pumpkin seeds (coating) | 63 (0.6 g per piece) |

All ingredients (Horst Bode Import-Export GmbH, Germany) are processed according to the protocol of Example 1.

A batch of 20 fruit balls each is transferred into a flat, rectangular box with excess shredded pumpkin seeds and coated overall by slight tilting and shaking. On average, each fruit ball is covered with 0,6g shredded pumpkin seeds.

The apple-pumpkin seed fruit balls have a sugar content of 36.7 % (w/w).

### Example 3: Mango - Almond fruit balls

| **Ingredient** | **amount (g)** |
|---|---|
| dried mango slices | 421 |
| dried apricots | 211 |
| rolled oats (small leaf) | 137 |
| almonds | 126 |
| mango pulp | 105 |

All ingredients (Horst Bode Import-Export GmbH, Germany) are processed according to the protocol of Example 1 without coating.

The sugar content is 35.7 % (w/w).

### Example 4: Pineapple - Coconut fruit balls

| **Ingredient** | **amount (g)** |
|---|---|
| dried pineapple slices | 442 |
| almonds | 166 |
| rolled oats (small leaf) | 155 |
| dried appricots | 110 |
| apple pulp | 110 |
| fine coconut flakes (coating) | 15 (about 0.15g per piece) |

All ingredients (Horst Bode Import-Export GmbH, Germany) are processed according to the protocol of Example 1.

A batch of 20 fruit balls each is transferred into a flat, rectangular box with excess fine coconut flakes and coated overall by slight tilting and shaking. On average, each fruit ball is covered with 0,15g fine coconut flakes.

The sugar content is 25.5 % (w/w).

### Example 5: Cherry - Raspberry fruit balls

| **Ingredient** | **amount (g)** |
|---|---|
| dried sweet cherries | 330 |
| dried apricots | 220 |
| rolled oats (small leaf) | 143 |
| almonds | 132 |
| apple pulp | 110 |
| freeze dried raspberry pieces (coating) | 66 (about 0.6g per piece) |

All ingredients (Horst Bode Import-Export GmbH, Germany; Schmütz-Naturkost, Germany) are processed according to the protocol of Example 1.

A batch of 20 fruit balls each is transferred into a flat, rectangular box with excess freeze dried raspberry pieces and coated overall by slight tilting and shaking. On average, each fruit ball is covered with 0.6g raspberry pieces.

The sugar content is 25.4 % (w/w).

### Example 6: Dates - Cocoa fruit balls

| **Ingredient** | **amount (g)** |
|---|---|
| dried dates | 543 |
| almonds | 152 |
| rolled oats (small leaf) | 109 |
| apple pulp | 130 |
| cocoa powder | 65 |

All ingredients (Horst Bode Import-Export GmbH, Germany) are processed according to the protocol of Example 1 without coating.

The sugar content is 36.6 % (w/w).

### Example 7: Apple - Cape Gooseberry fruit balls

| **Ingredient** | **amount (g)** |
|---|---|
| cape gooseberry | 115 |
| almonds | 115 |
| apple pulp | 138 |
| rolled oats (small leaf) | 115 |
| dried apples | 345 |
| dried apricots | 172 |

All ingredients (Horst Bode Import-Export GmbH, Germany) are processed according to the protocol of Example 1 without coating.

The sugar content is 39.0 % (w/w).

### Example 8: Analysis of firmness and texture of fruit snacks with fruit pulp binder and without

The fruit confectionary described here is characterized by a unique dimensional stability and firmness, which is both pleasantly soft to the bite and compact enough to guarantee the round shape during and after packaging and shipping, until the end of the shelf life. This outstanding texture was created by the use of fruit pulp and rolled grains. In order to determine and characterize the texture of spherical fruit snacks we used texture analysis.

To determine the firmness of the fruit confectionary we used force measurement with a texture analyzer (TA.XTExpressC, Winopal Forschungsbedarf GmbH, Germany). This device provides measurement results on the strength of the products, from which conclusions can be drawn about other parameters such as stickiness, product diameter and homogeneity of the snack ball. Thus, different recipes and the resulting textures of the fruit balls can be compared and also used as a measure for quality control. Moreover, the unique texture of the fruit confectionary described here can be quantified and thus distinguished from other marketed products.

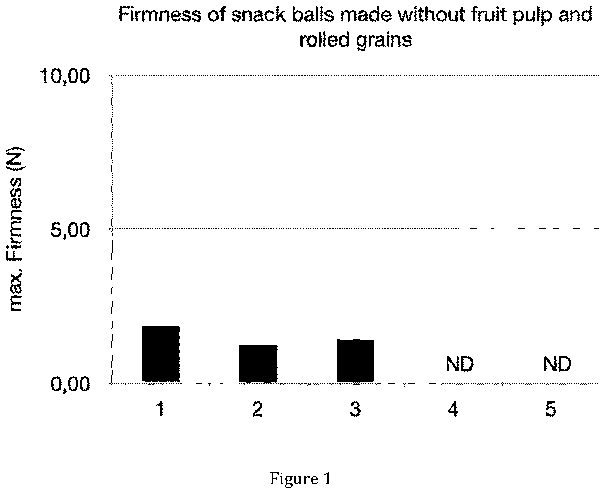

Figure 1 shows the firmness of five different snack food products according to above recipes without fruit pulp and rolled grains.

For fruit balls according to the recipes of examples 4 and 5 the fruit mass was too dry and it was not possible to form stable snack balls and perform measurements. This experiment shows, that for the production of snack balls according to the present invention, a binder is indispensable to produce a moldable fruit mass.

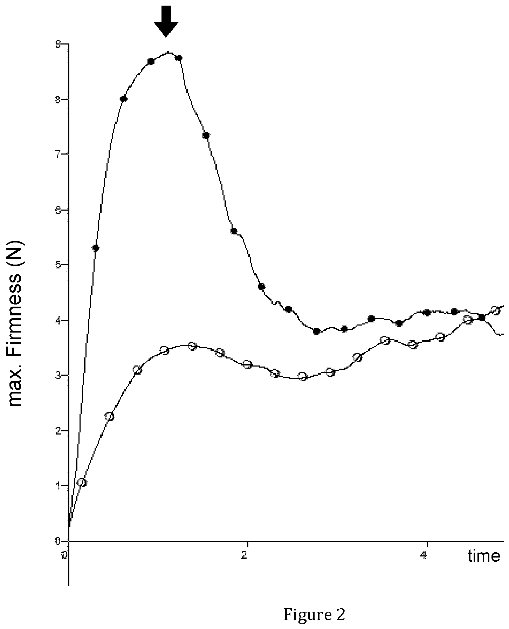

Figure 2 shows a continuous force measurement of snack balls to compare the consistency of recipes with fruit pulp according to the invention or a corresponding amount of water.

The figure shows representative measurement curves of force measurements with the texture analyzer TA.XTexpress of 2 different recipes. Full black symbols show a measurement curve of a snack ball of the type Pineapple-Coconut made with water and hollow symbols a measurement curve with apple pulp, respectively.

A harder outer shell is clearly visible for the recipe produced with water (arrow). This shell is clearly noticeable during tasting.

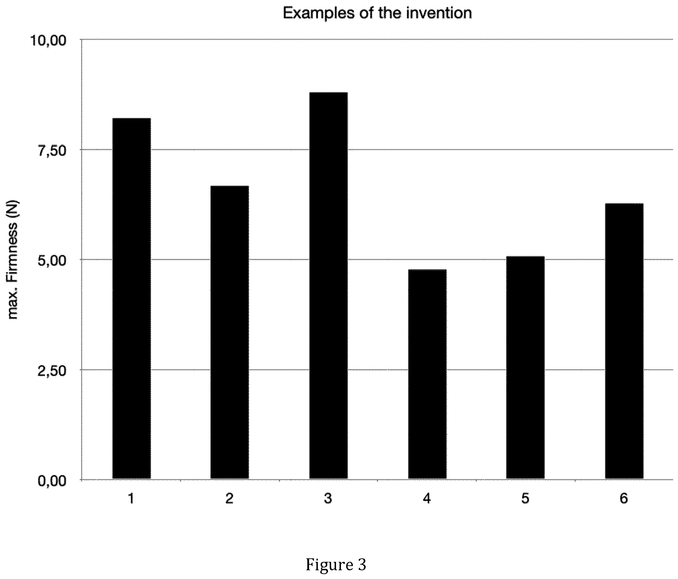

Figure 3 shows the maximum firmness between 2N and 10N of following snack ball recipes:
1 - Mango-Almond
2 - Cherry-Raspberry
3 - Dates-Cocoa
4 - Apricot-Amaranth
5 - Pineapple-Coconut
6 - Apple-Cape Gooseberry

Detailed recipes are listed under Examples 1 - 7. Snack balls were prepared as described via shredding, extrusion and boiling with respective machines.

## Claims

1. An edible snack food product comprising:
a) dried fruit;
b) cereals;
c) fruit pulp;
wherein the snack food product has a total sugar content of 40 % w/w or less.

2. The edible snack food product of claim 1, wherein the snack food product is free of an added thickening agent such as locust bean gum, starch, gelatin, and/or xanthan.

3. The edible snack food product of claim 1 or 2, wherein the snack food product is free of fruit, seed, nut or cereal extracts, such as protein extracts.

4. The edible snack food product according to any one of claims 1 to 3, wherein the snack food product additionally comprises nuts and/or seeds and/or a coating.

5. The edible snack food product according to any one of claims 1 to 4, wherein the snack food product consists of:
a)dried fruit;
b) cereals and optionally nuts and/or seeds;
c) fruit pulp;
d) optionally a coating of puffed cereals, seeds, shredded nuts or seeds, and/or dried fruit or nut flakes or any combination thereof.

6. The edible snack food product according to any one of claims 1 to 5 comprising at least 30 % w/w of dried fruit.

7. The edible snack food product according to any one of claims 1 to 6 comprising 10 % to 15 % w/w of fruit pulp.

8. The edible snack food product according to any one of claims 1 to 7 comprising 10 % to 20 % of cereals.

9. The edible snack food product according to any one of claims 1 to 8 comprising a coating, wherein the coating is 1% to 10% w/w.

10. The edible snack food product according to any one of claims 1 to 9, consisting of:
a) at least 40 % w/w dried fruit;
b) 10 to 15 % w/w fruit pulp;
c) 15 to 35 % w/w cereals and optionally nuts and/or seeds; and
d) optionally 1 to 10% w/w of puffed cereals, seeds, shredded nuts or seeds, and or dried fruit and/or nut flakes as a coating.

11. The edible snack food product according to any one of claims 1 to 10, wherein the dried fruit is selected from dried apples, dried apricots, dried cherries, dried dates, dried mango, dried pineapple and combinations thereof.

12. The edible snack food product according to any one of claims 1 to 11, wherein the fruit pulp is selected from apple pulp, mango pulp, and mixtures thereof.

13. The edible snack food product according to any one of claims 1 to 12, wherein the nuts, seed and/or cereals are selected from almonds, cocoa, oats, walnuts, and combinations thereof.

14. A method for producing an edible snack food product according to any one of claims 1 to 13, comprising the steps of:
a) mixing the dried fruit, fruit pulp and nuts, seeds and or cereals;
b) extruding the mixture obtained in step a);
c) cutting and shaping the extruded mixture into desired form;
d) optionally coating the shaped mixture;
e) backing the edible snack food product.

15. The method according to claim 14 additionally comprising comprising coating the shaped mixture with puffed cereals, seeds, shredded nuts or seeds, and/or dried fruit or nut flakes or any combination thereof.
